(19) Europäisches Patentamt / European Patent Office / Office européen des brevets

(11) **EP 1 003 011 B1**

(12) **FASCICULE DE BREVET EUROPEEN**

(45) Date de publication et mention
de la délivrance du brevet:
**26.12.2007 Bulletin 2007/52**

(51) Int Cl.:
***G01B 11/00*** *(2006.01)*     ***G01B 11/275*** *(2006.01)*
***G01C 15/00*** *(2006.01)*

(21) Numéro de dépôt: **99402838.9**

(22) Date de dépôt: **16.11.1999**

(54) **Détermination optique des positions relatives d'objets dans l'espace**

Optische Bestimmung der relativen Positionen von Körpern in einem Raum

Optical determination of the relative positions of objects in space

(84) Etats contractants désignés:
**DE DK GB IE IT**

(30) Priorité: **20.11.1998 FR 9814661**

(43) Date de publication de la demande:
**24.05.2000 Bulletin 2000/21**

(60) Demande divisionnaire:
**07000302.5 / 1 808 670**

(73) Titulaire: **FFB**
**58440 Myennes (FR)**

(72) Inventeurs:
• **Rapidel, Jean-Loup**
**27730 Bueil (FR)**
• **Lapreste, Jean-Thierry**
**63000 Clermond-Ferrand (FR)**
• **Rives, Gérard**
**63450 Chanonat (FR)**
• **Dhome, Michel**
**63430 Pont du Chateau (FR)**
• **Lavest, Jean-Marc**
**63000 Clermont-Ferrand (FR)**

(74) Mandataire: **Jacobson, Claude**
**Cabinet Lavoix**
**2, Place d'Estienne d'Orves**
**75441 Paris Cedex 09 (FR)**

(56) Documents cités:
**DE-A- 4 041 723**     **US-A- 4 639 878**
**US-A- 4 928 175**     **US-A- 5 148 591**
**US-A- 5 532 816**

## Description

La présente invention concerne une installation optique de détermination des positions relatives d'au moins deux objets dans l'espace, du type comportant au moins deux systèmes optiques chacun associé à un repère d'observation, les systèmes optiques étant adaptés chacun pour la détermination de la position d'un objet dans l'espace par rapport à son repère d'observation; à partir d'une image de l'objet relevée par ledit système optique.

Elle concerne en outre un procédé de détermination des positions relatives d'au moins deux objets dans l'espace, du type mettant en oeuvre au moins deux systèmes optiques chacun associé à un repère d'observation, les systèmes optiques étant adaptés chacun pour la détermination de la position d'un objet dans l'espace par rapport à son repère d'observation, à partir d'une image de l'objet relevée par ledit système optique.

Pour le contrôle de la géométrie d'un véhicule automobile, il est nécessaire de connaître les positions relatives des roues du véhicule. Ces informations permettent de contrôler et d'éventuellement corriger le parallélisme des roues et en particulier la géométrie du véhicule.

A cet effet, on connaît différentes installations et procédés permettant, à l'aide de plusieurs systèmes optiques observant chacun une roue du véhicule, de déterminer les positions relatives de ces roues. De tels dispositifs et procédés sont décrits par exemple dans les documents WO-94/05969 et US-A-5,675,515.

Dans ces installations, les systèmes optiques sont formés par des caméras indépendantes, ou une caméra unique associée à des ensembles de lentilles définissant des chemins optiques distincts pour un même faisceau incident. Les systèmes optiques permettent l'observation simultanée des roues du véhicule, et, à partir des images de celles-ci, de déterminer leurs positions relatives.

A cet effet, il est nécessaire que les différents systèmes optiques soient dans des positions relatives connues, sans quoi il est impossible de corréler les informations obtenues à partir des images de chaque roue. Pour garantir des positions relatives fixes des systèmes optiques les uns par rapport aux autres, les dispositifs décrits dans ces documents prévoient des structures mécaniques rigides sur lesquelles sont immobilisés les systèmes optiques.

La présence de telles structures mécaniques rigides rend l'installation encombrante. De plus, celle-ci est fragile puisque la déformation, par exemple suite à un choc involontaire, des structures mécaniques rigides conduit à des erreurs dé mesure des positions relatives des roues du véhicule.

US-A-5148 591 décrit un appareil robotique et une procédé pour étalonner un appareil robotique du type comportant un bras et une extrémité active pour manipuler ou travailler automatiquement sur un objet dans un poste de travail, par guidage des mouvements du bras et de l'extrémité active au moyen d'un calculateur de guidage programmé afin d'effectuer une manipulation ou un travail prévu sur l'objet, et étalonnage de mouvements du bras et de l'extrémité active, commandé par ordinateur, par génération d'une correction à la suite d'une comparison entre une position nominale et une position réelle du bras et utilisation du signal de correction pour modifier le signal de guidage respectif, caractérisé en ce que la position du bras et de l'extrémité active, lorsqu'ils approchent du poste de travail, est détectée indépendamment des moyens de guidage, afin qu'un signal d'étalonnage soit généré, le signal d'étalonnage est comparé à un signal prédéterminé de référence pour établir le signal de correction et l'ordinateur de guidage est réinitialisé en réponse au signal de correction.

L'invention a pour but de proposer une installation et un procédé optiques de détermination des positions relatives, dans l'espace, d'au moins deux objets, notamment des roues de véhicules, l'installation ayant un encombrement réduit, une mise en oeuvre aisée, et une sensibilité réduite aux conditions rigoureuses rencontrées dans un garage.

A cet effet, l'invention a pour objet une installation optique selon la revendication 1.

Suivant des modes particuliers de réalisation, l'installation optique comporte les caractéristiques selon les revendications 2-5.

L'invention a en outre pour objet un procédé optique selon la revendication 6.

L'invention sera mieux comprise à la lecture de la description qui va suivre, donnée uniquement à titre d'exemple et faite en se référant aux dessins, sur lesquels :

- La figure 1 est une vue de dessus d'une installation optique selon l'invention adaptée pour déterminer les positions relatives des quatre roues d'un véhicule automobile ;
- Les figures 2A et 2B sont des vues en perspective d'un même système optique de référence du dispositif de la figure 1 sur lesquelles sont représentés respectivement un repère d'observation propre à l'organe de recueil d'image et un repère visible défini par un ensemble de points de référence ;
- La figure 3 est une vue en perspective d'un système optique de référence disposé face à un miroir qui est déplaçable entre deux positions, afin de déterminer la position du repère d'observation du système optique par rapport à son repère visible ; et
- La figure 4 est une vue schématique illustrant la détermination selon l'invention des positions relatives des repères d'observation de deux systèmes optiques en regard.

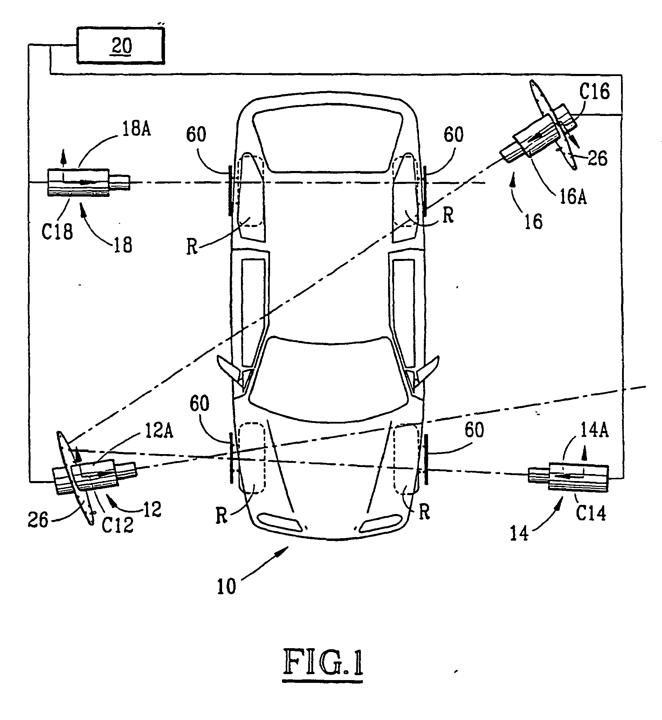

L'installation représentée sur la figure 1 est destinée à déterminer, de manière optique, les positions relatives des quatre roues R d'un véhicule automobile désigné par la référence 10.

L'installation comporte quatre systèmes optiques 12, 14, 16, 18 associés chacun à une roue R du véhicule. Ils comportent chacun une caméra vidéo CCD notée 12A, 14A, 16A, 18A. Ces quatre caméras sont reliées à une unité centrale de traitement d'informations 20 formée par exemple par un ordinateur adapté pour traiter les images reçues.

Les systèmes optiques 12, 14, 16, 18 sont déplaçables les uns par rapport aux autres autour du véhicule 10. Pour un fonctionnement correct de l'installation, les systèmes optiques sont disposés immobiles aux quatre sommets d'un quadrilatère, notamment un rectangle entourant le véhicule.

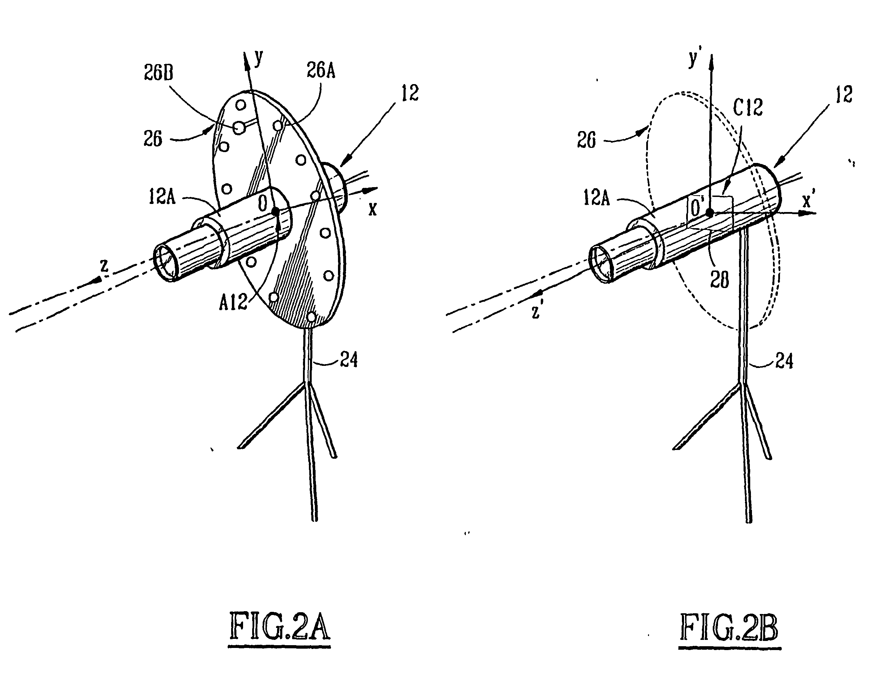

Le système optique 12 est représenté en perspective sur les figures 2A et 2B. La caméra vidéo 12A est supportée par un trépied 24 adapté pour être posé sur le sol. En outre, la caméra 12A est solidaire d'une cible 26 définissant un repère visible (O,xyz) noté A12, et visible sur la figure 2A. La cible 26 est immobilisée par des moyens mécaniques par rapport à la structure de la caméra et notamment par rapport à son repère d'observation (O',x'y'z') noté C12. Le repère d'observation C12 est lié à l'organe 28 de recueil d'image de la caméra 12A et notamment à son capteur CCD.

Le système optique 12 constitue un système optique de référence. De même, le système optique 16, disposé dans le coin opposé par rapport au véhicule dans la configuration de la figure 1, constitue également un système optique de référence et a une structure identique à celle du système optique 12.

Au contraire, les systèmes optiques 14 et 18 sont dépourvus de cible et comportent une simple caméra vidéo 14A, 18A portée par un trépied de support.

En variante, les systèmes optiques 14 et 18 sont de même structure que les systèmes optiques 12 et 16. Dans ce cas, les quatre systèmes optiques sont des systèmes optiques de référence, ce qui permet des mesures redondantes et donc une plus grande fiabilité du résultat de ces mesures.

Comme représenté sur la figure 2A, la cible 26 est formée, par exemple, par un disque de centre O à la périphérie duquel sont répartis douze points coplanaires 26A. En outre, la cible 26 comporte un treizième point 26B disposé en avant du plan principal du disque comportant les douze points 26A.

Ce point particularise angulairement le disque 26 et permet de définir deux axes orthogonaux, Ox et Oy dans le plan de la cible. L'axe Oy passe avantageusement au droit du point 26B.

La cible 26 présente un axe principal de symétrie défini par les douze points coplanaires répartis régulièrement à la périphérie du disque. L'axe principal de symétrie forme un axe Oz perpendiculaire aux axes Ox, Oy.

Les axes Oz, Oy, Oz et le point O définissent le repère visible A12.

Ainsi, la cible 26 constitue un ensemble de points de référence, de configuration géométrique connue définissant le repère visible A12. Celui-ci est immobilisé dans une position déterminable par rapport au repère d'observation C12 de la caméra.

Comme représenté sur la figure 2B, le repère d'observation C12 a pour centre, noté O', le centre du capteur CCD de la caméra 12A. Le repère d'observation est défini par un trièdre (O'x', O'y', O'z'), où O'z' est l'axe optique de la caméra, O'x' est un axe parallèle aux lignes horizontales de pixels du capteur CCD et O'y' est un axe parallèle aux colonnes verticales de pixels du capteur CCD.

La configuration géométrique de l'ensemble des points de référence de la cible 26 est mémorisée dans l'unité de traitement d'informations 20.

L'unité de traitement d'informations 20 comporte des moyens de mise en oeuvre d'algorithmes de détermination de la position d'un objet dans l'espace. En particulier, elle est adaptée pour déterminer la position d'un objet portant un ensemble de points de référence disposés suivant une configuration géométrique connue, cette configuration étant préalablement mémorisée dans l'unité 20. Cette position est déterminée à partir de l'image de cet objet prise par une caméra reliée à l'unité de traitement d'informations. La position de l'objet dans l'espace est calculée par rapport au repère d'observation C12 de la caméra. L'algorithme mis en oeuvre est de tout type adapté et par exemple du type de celui décrit dans la demande WO 94/05969.

En vue de la mise en oeuvre de tels algorithmes, il convient d'utiliser des caméras préalablement étalonnées pour compenser les erreurs résultant des imperfections de la caméra et du capteur qu'elle comporte.

A cet effet, on détermine, pour chaque caméra, ses caractéristiques intrinsèques (repère d'observation, distance focale, taille des éléments d'image ou pixels, distorsion radiale, distorsion tangentielle) et ses caractéristiques extrinsèques (matrices de rotation et de translation qui, appliquées à l'objet observé, forment une image strictement identique à l'image observée par la caméra débarrassée de ses distrosions). On détermine ainsi par des méthodes connues les corrections devant être apportées aux images produites afin de déterminer une position correcte d'un objet dans l'espace.

Pour la mise en oeuvre du procédé selon l'invention, il est nécessaire de connaître, pour chaque système optique de référence 12, 16, les positions relatives du repère d'observation de la caméra, et du repère visible défini par la cible. En effet, il est extrêmement délicat, voire impossible, lors de l'immobilisation de la cible sur la caméra, de fixer celle-ci de sorte que les deux repères C12 et A12 soient exactement confondus.

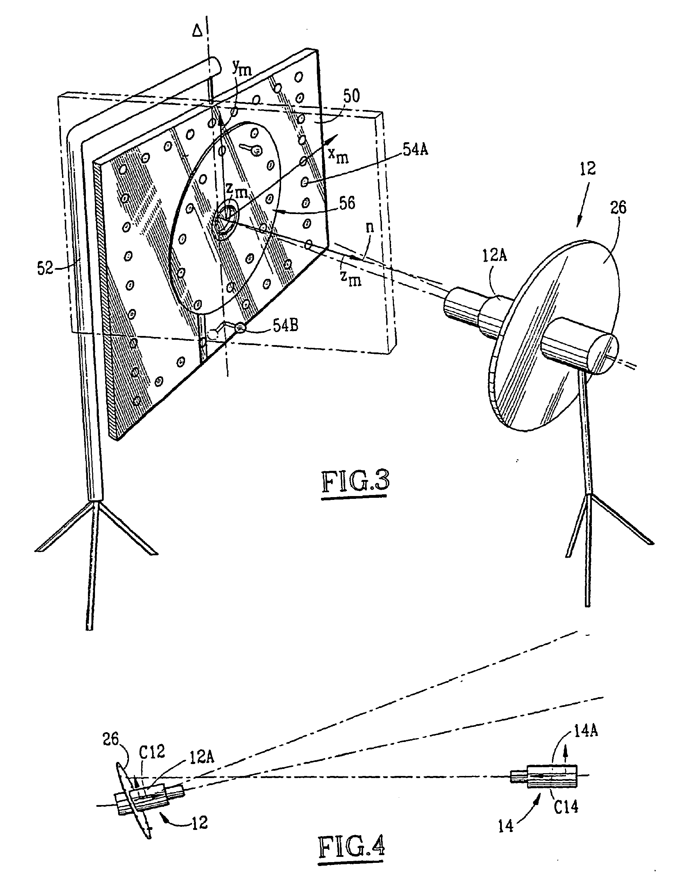

Sur la figure 3 est illustré le procédé mis en oeuvre pour déterminer la position relative des deux repères C12 et A12 propre au système optique 12. Le procédé utilisé pour le système optique 16 est analogue.

Suivant ce procédé, le système optique 12 est disposé en regard de la face réfléchissante d'un miroir plan 50. Ce miroir est suspendu à une potence 52. Les moyens de suspension sont adaptés pour un mouvement libre de rotation du miroir autour d'un axe vertical Δ.

Le miroir 50 comporte sur sa face réfléchissante un ensemble de marques de référence 54A constituées par des disques noirs répartis, en figure géométrique connue tel qu'un carré, à la périphérie du miroir. Une marque de référence supplémentaire 54B est disposée en avant de la face réfléchissante du miroir 50. La configuration géométrique des marques de référence 54A et 54B est connue et mémorisée dans l'unité de traitement d'informations 20.

Sur la figure 3, la normale au miroir 50 est notée n. Cette normale est perpendiculaire au miroir et passe par le centre de la figure délimitée par l'ensemble des marques 54A et 54B. Le miroir comporte un repère propre ($O_m$, $x_m y_m z_m$) dont le centre $O_m$ est le centre de la figure délimitée par les marques 54A. L'axe $O_m z_m$ s'étend suivant la normale n. Les axes $O_m x_m$ et $O_m y_m$ s'étendent perpendiculairement l'un à l'autre dans le plan du miroir 50. Avantageusement l'axe $O_m y_m$ s'étend parallèlement à l'axe Δ.

La cible 26, portant l'ensemble des points de référence 26A et 26B, se réfléchit sur la surface réfléchissante du miroir 50 et forme sur le miroir une image de la cible notée 56.

Ainsi, la caméra 12A recueille, dans le repère d'observation C12, une image de la face réfléchissante du miroir 50 comportant d'une part l'ensemble des marques de référence 54A et 54B, et d'autre part l'image réfléchie 56 de la cible portée par le système optique.

La caméra 12A étant reliée à l'unité de traitement d'informations 20, celle-ci détermine, à partir de l'algorithme mémorisé, la position du miroir 50 par rapport au repère d'observation C12 à partir de l'image prise de l'ensemble des marques de référence 54A et 54B portées par le miroir.

De même, l'unité de traitement d'informations 20 détermine, par mise en oeuvre de l'algorithme mémorisé, la position de l'image virtuelle de la cible 26 par rapport au repère d'observation C12 de la caméra. Plus particulièrement, l'unité de traitement d'informations 20 détermine la position d'un repère visible virtuel (O",x"y"z") associé à l'image virtuelle de la cible 26 par rapport au repère d'observation (O',x'y'z') de la caméra.

Le repère visible virtuel (O", x"y"z") est l'image virtuelle du repère visible (O,xyz) obtenue par réflexion dans le miroir 50.

A partir des positions relatives, du repère d'observation (O',x'y'z') par rapport au repère du miroir ($O_m$,$x_m y_m z_m$) d'une part, et du repère visible virtuel (O",x"y"z") par rapport au repère d'observation(O',x'y'z') d'autre part, l'unité centrale de traitement d'informations 20 détermine la position du repère d'observation (O',x'y'z') de la caméra, par rapport au repère visible (O,xyz) défini par la cible 26.

A cet effet, l'unité de traitement d'informations 20 procède de la manière suivante.

Par l'algorithme mis en oeuvre par l'unité 20, la position de l'image virtuelle, correspondant à l'image 56 de la cible et obtenue par réflexion dans le miroir 50, est déterminée par analyse de l'image recueillie par la caméra 12A.

Ce positionnement permet de déterminer une matrice $M_{o-v}$ de passage entre le repère virtuel (O",x"y"z") lié à l'image virtuelle et le repère d'observation (O',x'y'z'). Ce changement de repère s'exprime, sous forme matricielle, de la manière suivante :

$$\begin{bmatrix} x'' \\ y'' \\ z'' \\ 1 \end{bmatrix} = M_{o-v} \begin{bmatrix} x' \\ y' \\ z' \\ 1 \end{bmatrix} \text{ où } M_{o-v} = \begin{bmatrix} R & T \\ 0 & 1 \end{bmatrix} :$$

$M_{o-v}$ étant une matrice 4x4.

où R est une sous-matrice de rotation 3x3

T est une sous-matrice de translation 1x3 ;

(x",y",z") sont les coordonnées d'un point M dans le repère visible virtuel (O",x"y"z") ; et

(x',y',z') sont les coordonnées du point M dans le repère d'observation (O',x'y'z').

Par un algorithme de même type, l'unité de traitement d'informations 20 détermine la position du miroir 50, et notamment de son repère associé ($O_m$,$x_m y_m z_m$) dans le repère d'observation (O',x'y'z') lié à la caméra. Pour ce faire, l'unité de traitement d'informations 20 analyse l'image du miroir 50 recueillie par la caméra et détermine la position du miroir 50 à partir de l'analyse de la position des marques de référence 54A et 54B apparaissant sur l'image.

Une matrice de passage $M_m$, entre le repère d'observation (O',x'y'z') et le repère ($O_m$,$x_m y_m z_m$) du miroir est ainsi déterminée. Les coordonnées d'un même point M dans les deux repères sont donc liées par la relation :

$$\begin{bmatrix} x_m \\ y_m \\ z_m \\ 1 \end{bmatrix} = M_m \begin{bmatrix} x' \\ y' \\ z' \\ 1 \end{bmatrix} \text{ où } M_m = \begin{bmatrix} R_m & T_m \\ 0 & 1 \end{bmatrix}$$

avec $R_m$ est une sous-matrice de rotation 3x3

$T_m$ est une sous-matrice de translation 1x3 ; et

$(x_m, y_m, z_m)$ sont les coordonnées du point M dans le repère du miroir $(O_m, x_m y_m z_m)$.

d'où l'on déduit :

$$\begin{bmatrix} x' \\ y' \\ z' \\ 1 \end{bmatrix} = M_m^{-1} \begin{bmatrix} x_m \\ y_m \\ z_m \\ 1 \end{bmatrix}$$

où $M_m^{-1}$ est l'inverse de la matrice $M_m$.

Ainsi, il est possible d'exprimer, dans le repère visible virtuel (O'',x'' y''z'') les coordonnées d'un point M en fonction de ses coordonnées dans le repère du miroir $(O_m, x_m y_m z_m)$ par la relation matricielle suivante :

$$\begin{bmatrix} x'' \\ y'' \\ z'' \\ 1 \end{bmatrix} = M_{o'-v'} \begin{bmatrix} x_m \\ y_m \\ z_m \\ 1 \end{bmatrix}$$

avec $M_{o-v}' = M_{o-v} * M_m^{-1}$ où * est le produit matriciel

Afin de déterminer la position d'un point réel M dans le repère du miroir $(O_m, x_m y_m z_m)$, on utilise la propriété selon laquelle l'image virtuelle d'un point de coordonnées (x,y,z) dans un repère donné, lorsque le miroir s'étend suivant le plan Ox, Oy, a pour coordonnées (x,y,-z).

Ainsi, les coordonnées (x'',y'',z'') de l'image virtuelle dans le repère visible virtuel du point M de coordonnées (x,y,z) dans le repère visible sont obtenues par l'application de la matrice diagonale $S_z$ suivante :

$$\begin{bmatrix} 1 & 0 & 0 & 0 \\ 0 & 1 & 0 & 0 \\ 0 & 0 & -1 & 0 \\ 0 & 0 & 0 & 1 \end{bmatrix}$$

Les coordonnées (xyz) d'un point M exprimées dans le repère visible (O,xyz) s'expriment, en fonction des coordonnées $(x_m y_m z_m)$ de ce même point dans le repère du miroir $(O_m, x_m y_m z_m)$, sous la forme :

$$\begin{bmatrix} x \\ y \\ z \\ 1 \end{bmatrix} = M_{o'-v} * S_z \begin{bmatrix} x_m \\ y_m \\ z_m \\ 1 \end{bmatrix} \tag{2}$$

En notant $M_o' = M_{o-v}' * S_z$, $M_o'$ est donc la matrice de passage du repère du miroir $(O_m,x_my_mz_m)$ au repère visible $(O,xyz)$.

Afin de déterminer les coordonnées d'un point dans le repère visible $(O,xyz)$ à partir des coordonnées $(x',y',z')$ du même point dans le repère d'observation $(O,x'y'z')$, on déduit des relations (1) et (2) la relation matricielle suivante :

$$\begin{bmatrix} x \\ y \\ z \\ 1 \end{bmatrix} = M_o \begin{bmatrix} x' \\ y' \\ z' \\ 1 \end{bmatrix}$$

avec $M_o = M_{o-v} * M_m^{-1} * S_z * M_m$.

Ainsi, on conçoit que l'unité centrale de traitement d'informations 20 peut, par mise en oeuvre du calcul exposé ci-dessus, déterminer la position du repère d'observation C12 associé à la caméra par rapport au repère visible A12 associé à la cible 26 solidaire de cette caméra.

De plus, selon l'invention, il est prévu de positionner l'ensemble des systèmes optiques, et notamment les systèmes optiques de référence par rapport à la verticale du lieu de contrôle du véhicule.

A cet effet, on détermine une image du miroir 50 dans une première position de celui-ci, représentée en traits forts sur la figure 3. On déplace ensuite le miroir jusqu'à une seconde position représentée en traits mixtes sur la figure 3. Le déplacement est opéré autour de l'axe Δ de suspension du miroir. Cet axe Δ correspond à la verticale du lieu d'exploitation de l'installation.

A partir de l'algorithme mémorisé, l'unité centrale de traitement d'informations 20 détermine, pour les deux positions du miroir, les coordonnées des plans dans lesquels s'étend le miroir. La droite Δ correspondant à l'intersection des deux plans ainsi déterminés. L'unité centrale de traitement d'informations 20 détermine ainsi la position relative du système optique de référence par rapport à une famille de plans horizontaux qui sont d'une importance capitale pour le cas particulier de la géométrie des véhicules.

Sur la figure 4, sont représentées schématiquement les systèmes optiques 12 et 14 en regard, en l'absence du véhicule automobile 10. Les systèmes optiques 12 et 14 sont disposés, comme sur la figure 1, l'un en face de l'autre avec un espace suffisant pour permettre le passage du véhicule 10.

Afin de déterminer par exemple la position relative des roues avant du véhicule, il convient de déterminer les positions relatives des repères d'observations associés aux systèmes optiques 12 et 14. Ceux-ci sont désignés par la figure 6 par C12 et C14.

La matrice de passage entre le repère d'observation C12 et le repère visible A12 est connue, puisque déterminée selon la méthode exposée précédemment.

Afin de déterminer les positions relatives des repères d'observation C12 et C14, le système optique 14 réalise, sous la commande de l'unité de traitement d'informations 20, une image de la cible 26. Cette image est traitée par l'unité de traitement d'informations 20.

Celle-ci, connaissant la configuration géométrique de l'ensemble des points de référence de la cible 26, détermine, par mise en oeuvre de l'algorithme mémorisé, la position relative de la cible 26 par rapport au repère d'observation C14 du système optique observant. Elle en déduit ainsi la position du repère visible A12 défini par la cible 26 par rapport au repère d'observation C14.

Connaissant la matrice de passage du repère d'observation C12 au repère visible A12 et inversement, l'unité centrale de traitement d'informations 20 détermine les positions relatives des repères d'observation C12 et C14.

Ainsi, l'unité centrale de traitement d'informations 20 détermine la position relative entre les repères d'observation associés aux deux systèmes optiques en regard 12 et 14.

De même, le système optique 16 disposé du côté opposé au système optique 12 par rapport à l'emplacement du véhicule 10 observe la cible 26 portée par le système optique 12 en l'absence de véhicule. De manière analogue, l'unité de traitement d'informations 20 détermine la position du repère d'observation, noté C16, associé au système optique 16 par rapport au repère d'observation C12 du système optique de référence.

Enfin, le système optique 16 étant également muni d'une cible immobilisée par rapport à la caméra incorporée dans ce système optique, l'observation de celui-ci à partir du système optique 18 permet, à l'unité centrale de traitement d'informations 20, de déterminer la position du repère d'observation noté C18 associé au système optique 18 par rapport au repère d'observation C16 du système optique de référence 16.

En effet, de manière analogue au procédé décrit en regard de la figure 4, la connaissance des positions relatives du repère visible de la cible portée par le système optique 16 et du repère d'observation associé au système optique 16 permet de déterminer les positions relatives des repères d'observation C16 et C18.

Ainsi, par chaînage, si un système optique est dit de référence, l'ensemble de l'installation est référencée.

Après mise en place du véhicule 10, les quatre systèmes optiques ne peuvent plus s'observer l'un l'autre.

Toutefois, chacun d'eux est susceptible de prendre une image d'une roue R du véhicule.

Comme décrit dans la demande WO-94/05969, chaque roue est munie d'une cible ou applique 60 reliée rigidement et de manière connue à la roue. Chaque applique comporte un ensemble de marques réparties suivant une configuration géométrique connue et mémorisée dans l'unité de traitement d'information 20.

Avant de procéder à la détermination des positions relatives des appliques et donc celles des roues, il convient de prendre en compte le voile de chaque applique et son excentrage afin que l'unité centrale de traitement d'informations 20 en tienne compte lors des calculs ultérieurs. A cet effet, et suivant un procédé connu en soi, l'unité 20 analyse plusieurs images de chaque roue prises dans des positions distinctes déterminées.

A partir de l'observation simultanée de chaque applique 60 depuis les quatre systèmes optiques, l'unité centrale de traitement d'informations 20 détermine la position relative de chaque roué par rapport au repère d'observation de la caméra associée comme connu en soi. En effet, le centre des roues étant connu, les plans horizontaux étant connus, leur section avec le plan des roues étant connue, la verticale du lieu étant connue, il est aisé de retrouver les angles et les distances caractéristiques de la géométrie du véhicule.

Connaissant les positions relatives des repères d'observation des quatre systèmes optiques, l'unité centrale de traitement d'informations 20 déduit les positions relatives des quatre roues du véhicule. Il est ainsi possible de déterminer la géométrie du véhicule et d'effectuer toute opération de réglage nécessaire au fonctionnement satisfaisant du véhicule.

On conçoit qu'avec une telle installation, la position des quatre systèmes optiques peut être modifiée pour chaque véhicule. De plus, il n'est pas nécessaire entre chaque opération de mesure de maintenir une position fixe entre les systèmes optiques. Il suffit simplement qu'entre chaque véhicule, l'unité 20 détermine à nouveau les positions relatives des repères d'observation associés aux différents systèmes optiques, suivant le procédé expliqué précédemment. Ainsi, l'installation est d'un faible encombrement et peut être entreposée facilement en dehors des phases d'utilisation.

Par ailleurs, l'installation et le procédé décrits ici sont généralisables à un nombre quelconque de caméras référencées les unes par rapport aux autres. Ainsi, il est possible de mesurer le véhicule dans différentes attitudes et à des hauteurs différentes.

**Revendications**

1. Installation optique de détermination des positions relatives d'au moins deux objets (R) dans l'espace, du type comportant au moins deux systèmes optiques (12, 14, 16, 18) chacun associé à un repère d'observation (C12, C14, C16, C18), les systèmes optiques étant adaptes chacun pour la détermination de la position d'un objet dans l'espace par rapport à son repère d'observation (C12, C14, C16, C18), à partir d'une image de l'objet relevée par ledit système optique (12, 14, 16, 18), les systèmes optiques (12, 14, 16, 18) étant deplacables les uns par rapport aux autres, un système optique (12, 16), constituant un système optique de référence, comporte un ensemble (26) de points de référence, de configuration géométrique connue, l'ensemble (26) des points de référence étant immobilisé dans une position connue par rapport au repère d'observation (C12, C16) du système optique de référence (12, 16), et visible depuis le ou chaque autre système optique (14, 16, 18) en l'absence des objets, le ou chaque autre système optique (14, 16, 18) comporte des moyens (20) d'analyse d'une image de l'ensemble (26) des points de référence **caractérisée en ce que** le ou chaque autre système optique (14, 16, 18) comporte des moyens (20) de positionnement de l'ensemble (26) des points de référence par rapport à son repère d'observation (C14, C16, C18), **en ce qu'**elle comporte des moyens (20) de déduction de la position du repère d'observation (C14, C16, C18) du ou de chaque autre système optique (14, 16, 18) par rapport au repère d'observation (C12, C16) du système optique de référence, à partir de la position de l'ensemble (26) des points de référence par rapport à chaque repère d'observation (C14, C16, C18), et de la position connue de l'ensemble (26) des points de référence par rapport au repère d'observation (C12, C16) du système optique de référence (12, 16), et **en ce que** l'installation optique comporte quatre systèmes optiques (12, 14, 16, 18) destinés à être disposés aux sommets d'un quadrilatère pour la détermination des positions relatives de quatre objets (R) dans l'espace dont deux systèmes optiques (12, 16) sont disposé dans des coins opposés dudit quadrilatère.

2. Installation selon la revendication 1, **caractérisée en ce que** chaque système optique (12, 14, 16, 18) comporte une caméra vidéo (12A, 14A, 16A, 18A) supportée par un pied (24) et reliée à une même unité centrale de traitement d'informations (20).

3. Installation selon la revendication 1 ou 2, **caractérisée en ce que** ledit ensemble (26) de points de référence comporte un groupe de marques visibles discrètes coplanaires (26A) ainsi qu'au moins une marque visible non coplanaire (26B).

**4.** Installation selon l'une quelconque des revendications précédentes, **caractérisée en ce qu'**elle comporte des appliques (60) adaptées pour être solidarisées chacune à un objet (R) dans une position connue, et **en ce que** chaque système optique (12, 14, 16, 18) comporte des moyens (20) de détermination de la position d'une applique (60) dans l'espace par rapport à son repère d'observation (C12, C14, C16, C18) et des moyens (20) de déduction de la position de l'objet (R) par rapport à son repère d'observation (C12, C14, C16, C18) à partir de la position déterminée de l'applique (60) par rapport à son repère d'observation (C12, C14, C16, C18) et de la position connue de l'applique (60) par rapport à l'objet (R).

**5.** Installation selon l'une quelconque des revendications précédentes, **caractérisée en ce que** les objets (R) sont disposés à l'intérieur de la zone délimitée par le quadrilatère, l'ensemble (26) des points de référence d'un premier système optique de référence (12) étant visible depuis le second système optique de référence (16) en l'absence des objets (R), **en ce que** le second système optique de référence (16) comporte des moyens (20) d'analyse d'une image de l'ensemble (26) des points de référence du premier système optique de référence (12) et des moyens (20) de positionnement de l'ensemble (26) des points de référence (12) par rapport à son repère d'observation (C16), **en ce qu'**elle comporte des moyens (20) de déduction de la position du repère d'observation (C16) du second système optique de référence (16) par rapport au repère d'observation (C12) du premier système optique de référence du premier système optique de référence (12), à partir de la position de l'ensemble (26) des points de référence du premier système optique de référence (12) par rapport au repère d'observation (C16) du second système optique de référence (16), et de la position connue de l'ensemble (26) des points de référence du premier système optique de référence (12) par rapport au repère d'observation (C12) du premier système optique de référence (12), et **en ce qu'**elle comporte des moyens (20) de déduction des positions relatives des repères d'observation (C12, C14, C16, C18) de chaque système optique (12, 14, 16, 18).

**6.** Procédé optique de détermination des positions relatives d'au moins deux objets (R) dans l'espace, du type mettant en oeuvre au moins deux systèmes optiques (12, 14, 16, 18) chacun associe à un repère d'observation (C12, C14, C16, C18), les systèmes optiques étant adaptés chacun pour la détermination de la position d'un objet dans l'espace par rapport a son repère d'observation (C12, C14, C16, C18), à partir d'une image de l'objet relevée par ledit système optique (12, 14, 16, 18), les systèmes optiques (12, 14, 16, 18) étant déplacables les uns par rapport aux autres, l'on munit un système optique (12, 16), constituant un système optique de référence d'un ensemble (26) de points de référence, de configuration géométrique connue, l'ensemble (26) de points de référence étant immobilisé dans une position connue par rapport au repère d'observation (C12, C16) du système optique de référence (12, 16), et visible depuis le ou chaque autre système optique (14, 16, 18) en l'absence des objets (R), et le ou chaque autre système optique (14, 16, 18) analyse une image de l'ensemble (26) des points de référence **caractérisée en ce que** le ou chaque autre système optique (14, 16, 18) détermine le positionnement de l'ensemble (26) des points de référence par rapport à son repère d'observation (C14, C16, C18), **en ce que** l'on déduit la position du repère d'observation (C14, C16, C18) du ou de chaque autre système optique (14, 16, 18) par rapport au repère d'observation (C12, C16) du système optique de référence, à partir de la position de l'ensemble (26) des points de référence par rapport à chaque repère d'observation (C14, C16, C18), et de la position connue de l'ensemble (26) des points de référence par rapport au repère d'observation (C12, C16) du système optique de référence (12, 16)en ce que l'installation optique comporte quatre systèmes optiques (12, 14, 16, 18) disposés aux sommets d'un quadrilatère pour la détermination des positions relatives de quatre objets (R) dans l'espace dont deux systèmes optiques (12,16) sont disposé dans des coins opposés dudit quadrilatère.

**Claims**

**1.** Optical installation for determining the relative positions of at least two objects (R) in space, of the type comprising at least two optical systems (12, 14, 16, 18) each associated with an observation marker (C12, C14, C16, C18), the optical systems each being adapted to determine the position of an object in space in relation to its observation marker (C12, C14, C16, C18), from an image of the object provided by said optical system (12, 14, 16, 18), the optical systems (12, 14, 16, 18) being movable relative to one another, one optical system (12, 16), which constitutes an optical reference system, comprising a set (26) of reference points of a known geometric configuration, the set (26) of reference points being immobilised in a known position relative to the observation marker (C12, C16) of the optical reference system (12, 16), and visible from the or each other optical system (14, 16, 18) in the absence of the objects, the or each other optical system (14, 16, 18) comprising means (20) for analysing an image of the set (26) of reference points,
**characterised in that** the or each other optical system (14, 16, 18) comprises means (20) for positioning the set (26) of reference points relative to its observation marker (C14, C16, C18), **in that** it comprises means (20) for deducing the position of the observation marker (C14, C16, C18) of the or each other optical system (14, 16, 18) relative to the observation marker (C12, C16) of the optical reference system, from the position of the set (26) of reference points relative to each observation marker (C14, C16, C18) and from the known position of the set (26) of reference points relative to the observation marker (C12, C16) of the optical reference system (12, 16), and **in that** the optical installation comprises four optical systems (12, 14, 16, 18) adapted to be arranged at the vertices of a quadrilateral for determining the relative positions of four objects (R) in space, of which two optical systems (12, 16) are arranged in opposite corners of said quadrilateral.

2. Installation according to claim 1, **characterised in that** each optical system (12, 14, 16, 18) comprises a video camera (12A, 14A, 16A, 18A) supported by a base (24) and connected to the same central data processing unit (20).

3. Installation according to claim 1 or 2, **characterised in that** the set (26) of reference points comprises a group of discrete coplanar visible marks (26A) and at least one non-coplanar visible mark (26B).

4. Installation according to one of the preceding claims, **characterised in that** it comprises fixtures (60) each adapted to be secured to an object (R) in a known position, and **in that** each optical system (12, 14, 16, 18) comprises means (20) for determining the position of a fixture (60) in space relative to its observation marker (C12, C14, C16, C18) and means (20) for deducing the position of the object (R) relative to its observation marker (C12, C14, C16, C18), from the position ascertained for the fixture (60) relative to its observation marker (C12, C14, C16, C18) and from the known position of the fixture (60) relative to the object (R).

5. Installation according to one of the preceding claims, the set (26) of reference points of a first optical reference system (12) being visible from the second optical reference system (16) in the absence of the objects (R), in that the second optical reference system (16) comprises means (20) for analysing an image of the set (26) of reference points of the first optical reference system (12) and means (20) for positioning the set (26) of reference points (12) relative to its observation marker (C16), in that it comprises means (20) for deducing the position of the observation marker (C16) of the second optical reference system (16) relative to the observation marker (C12) of the first optical reference system of the first optical reference system (12), from the position of the set (26) of reference points of the first optical reference system (12) relative to the observation marker (C16) of the second optical reference system (16), and from the known position of the set (26) of reference points of the first optical reference system (12) relative to the observation marker (C12) of the first optical reference system (12), and in that it comprises means (20) for deducing the relative positions of the observation markers (C12, C14, C16, C18) of each optical system (12, 14, 16, 18).

6. Optical method of determining the relative positions of at least two objects (R) in space, of the type using at least two optical systems (12, 14, 16, 18) each associated with an observation marker (C12, C14, C16, C18), the optical systems each being adapted to determine the position of an object in space in relation to its observation marker (C12, C14, C16, C18), from an image of the object provided by said optical system (12, 14, 16, 18), the optical systems (12, 14, 16, 18) being movable relative to one another, an optical system (12, 16), which constitutes an optical reference system, is provided with a set (26) of reference points of a known geometric configuration, the set (26) of reference points being immobilised in a known position relative to the observation marker (C12, C16) of the optical reference system (12, 16), and visible from the or each other optical system (14, 16, 18) in the absence of the objects, and the or each other optical system (14, 16, 18) analyses an image of the set (26) of reference points, **characterised in that** the or each other optical system (14, 16, 18) determines the positioning of the set (26) of reference points relative to its observation marker (C14, C16, C18), **in that** the position of the observation marker (C14, C16, C18) of the or each other optical system (14, 16, 18) relative to the observation marker (C12, C16) of the optical reference system is deduced from the position of the set (26) of reference points relative to each observation marker (C14, C16, C18) and from the known position of the set (26) of reference points relative to the observation marker (C12, C16) of the optical reference system (12, 16), and **in that** the optical installation comprises four optical systems (12, 14, 16, 18) arranged at the vertices of a quadrilateral for determining the relative positions of four objects (R) in space, of which two optical systems (12, 16) are arranged in opposite corners of said quadrilateral.

**Patentansprüche**

1. Optische Anlage zur Bestimmung der relativen Stellungen von zumindest zwei Objekte (R) im Raum, von der Art, die zumindest zwei optische Systeme (12, 14, 16, 18) aufweist, die jeweils mit einem Beobachtungssystem (C12, C14, C16, C18) verbunden sind, wobei die optischen Systeme jeweils für die Bestimmung der Stellung eines Objektes im Raum relativ zu seinem Beobachtungssystem (C12, C14, C16, C18) von einem Bild des Objektes ausgehend eingerichtet sind, das das genannte optische System (12, 14, 16, 18) aufgenommen hat, wobei die optischen Systeme (12, 14, 16, 18) relativ zueinander bewegbar sind, wobei ein optisches System (12, 16), das ein optisches Bezugssystem darstellt, eine Anordnung (26) von Bezugspunkten bekannter geometrischer Konfiguration aufweist, wobei die Bezugspunktanordnung (26) in einer bekannten Stellung relativ zum Beobachtungssystem (C12, C16) des optischen Bezugssystems (12, 16) festgesetzt und von dem oder jedem anderen optischen System (14, 16, 18) bei Abwesenheit der Objekte sichtbar ist, wobei das oder jedes andere optische System (14, 16, 18) Mittel (20) zur Analyse eines Bildes der Bezugspunktanordnung (26) aufweist,

**dadurch gekennzeichnet, dass** das oder jedes andere optische System (14, 16, 18) Mittel (20) zur Positionierung der Bezugspunktanordnung (26) relativ zu seinem Beobachtungssystem (C14, C16, C18) aufweist, **dadurch**, dass sie Mittel (20) zur Ableitung der Stellung des Beobachtungssystems (C14, C16, C18) des oder jedes anderen optischen Systems (14, 16, 18) relativ zum Beobachtungssystem (C12, C16) des optischen Bezugssystems aus der Stellung der Bezugspunktanordnung (26) relativ zu jedem Beobachtungssystem (C14, C16, C18) und der bekannten Stellung der Bezugspunktanordnung (26) relativ zum Beobachtungssystem (C12, C16) des optischen Bezugssystems (12, 16) aufweist, und **dadurch**, dass die optische Anlage vier optischen Systeme (12, 14, 16, 18) die zur Anordnung in den Ecken eines Viereckes zur Bestimmung der relativen Stellungen von vier Objekten (R) im Raum bestimmt sind, wobei zwei der optische Systeme (12, 16) in einander gegenüberliegenden Ecken des genannten Viereckes angeordnet sind.

2. Anlage nach Patentanspruch 1, **dadurch gekennzeichnet, dass** jedes optische System (12, 14, 16, 18) eine Videokamera (12A, 14A, 16A, 18A) aufweist, die von einem Ständer (24) getragen wird und mit derselben Datenverarbeitungszentraleinheit (20) verbunden ist.

3. Anlage nach Patentanspruch 1 oder 2, **dadurch gekennzeichnet, dass** die genannte Bezugspunktanordnung (26) eine Gruppe sichtbarer, diskreter, koplanarer Markierungen (26A) umfasst, sowie mindestens eine nicht koplanare sichtbare Markierung (26B).

4. Anlage nach irgendeinem der vorangehenden Patentansprüche, **dadurch gekennzeichnet, dass** sie Ansätze (60) umfasst, die dafür eingerichtet sind, jeweils mit einem Objekt (R) in einer bekannten Stellung verbunden zu sein, und **dadurch**, dass jedes optische System (12, 14, 16, 18) Mittel (20) zur Bestimmung der Stellung eines Ansatzes (60) im Raum relativ zu seinem Beobachtungssystem (C12, C14, C16, C18) aus der bestimmten Stellung des Ansatzes (60) relativ zu seinem Beobachtungssystem (C12, C14, C16, C18) und der bekannten Stellung des Ansatzes (60) relativ zum Objekt (R) aufweist.

5. Anlage nach irgendeinem der vorangehenden Patentansprüche, **dadurch gekennzeichnet, dass** die Objekte (R) innerhalb der durch das Viereck begrenzten Zone angeordnet sind, wobei die Bezugspunktanordnung (26) eines ersten optischen Bezugssystems (12) vom zweiten optischen Bezugssystem (16) aus in Abwesenheit der Objekte (R) sichtbar ist, **dadurch**, dass das zweite optische Bezugssystem (16) Mittel (20) zur Analyse eines Bildes der Bezugspunktanordnung (26) des ersten optischen Bezugssystems (12) umfasst und Mittel (20) zur Positionierung der Anordnung (26) der Bezugspunkte (12) relativ zu seinem Beobachtungssystem (C16), **dadurch**, dass sie Mittel (20) zur Ableitung der Stellung des Beobachtungssystems (C16) des zweiten optischen Bezugssystems (16) relativ zum Beobachtungssystem (C12) des ersten optischen Bezugssystems (12) aus der Stellung der Bezugspunktanordnung (26) des ersten optischen Bezugssystems (12) relativ zum Beobachtungssystem (C16) des zweiten optischen Bezugssystems (16) und der bekannten Stellung der Bezugspunktanordnung (26) des ersten optischen Bezugssystems (12) relativ zum Beobachtungssystem (C12) des ersten optischen Bezugssystems (12) umfasst, und **dadurch**, dass sie Mittel (20) zur Ableitung der relativen Stellungen der Beobachtungssysteme (C12, C14, C16, C18) jeweils der optischen Bezugssysteme (12, 14, 16, 18) zueinander umfasst.

6. Optisches Verfahren zur Bestimmung der relativen Stellungen von zumindest zwei Objekte (R) im Raum, von der Art, die mindestens zwei optische Systeme (12, 14, 16, 18) verwendet, die jeweils mit einem Beobachtungssystem (C12, C14, C16, C18) verbunden sind, wobei die optischen Systeme jeweils für die Bestimmung der Stellung eines Objektes im Raum relativ zu seinem Beobachtungssystem (C12, C14, C16, C18) von einem Bild des Objektes ausgehend eingerichtet sind, das das genannte optische System (12, 14, 16, 18) aufgenommen hat, wobei die optischen Systeme (12, 14, 16, 18) relativ zueinander bewegbar sind, wobei ein optisches System (12, 16), das ein optisches Bezugssystem darstellt, mit einer Anordnung (26) von Bezugspunkten bekannter geometrischer Konfiguration versehen wird, wobei die Bezugspunktanordnung (26) in einer bekannten Stellung relativ zum Beobachtungssystem (C12, C16) des optischen Bezugssystems (12, 16) festgesetzt und von dem oder jedem anderen optischen System (14, 16, 18) bei Abwesenheit der Objekte (R) sichtbar ist, und das oder jedes andere optische System (14, 16, 18) ein Bild der Bezugspunktanordnung (26) analysiert,

**dadurch gekennzeichnet, dass** das oder jedes andere optische System (14, 16, 18) die Positionierung der Bezugspunktanordnung (26) relativ zu seinem Beobachtungssystem (C14, C16, C18) bestimmt, **dadurch**, dass die Stellung des Beobachtungssystems (C14, C16, C18) des oder jedes anderen optischen Systems (14, 16, 18) relativ zum Beobachtungssystem (C12, C16) des optischen Bezugssystems aus der Stellung der Bezugspunktanordnung (26) relativ zu jedem Beobachtungssystem (C14, C16, C18) und der bekannten Stellung der Bezugspunktanordnung (26) relativ zum Beobachtungssystem (C12, C16) des optischen Bezugssystems (12, 16) abgeleitet wird, und **dadurch**, dass die optische Anlage vier optischen Systeme (12, 14, 16, 18) in den Ecken eines Viereckes zur Bestimmung der relativen Stellungen von vier Objekten (R) im Raum angeordnet werden, wobei zwei optische Systeme (12, 16) in einander gegenüberliegenden Ecken des genannten Viereckes angeordnet werden.

# FIG.1

FIG.2A

FIG.2B

EP 1 003 011 B1

FIG.3

FIG.4

**EP 1 003 011 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9405969 A
- US 5675515 A
- US 5148591 A